# EUROPEAN PATENT APPLICATION

(11) **EP 2 216 710 A2**
(43) Date of publication of application: **11.08.2010**
(21) Application number: 09252107.9
(22) Date of filing: 01.09.2009
(51) Int. Cl.: G06F 3/06, G06F 11/14

(54) **Methods and apparatus for performing efficient data deduplication by metadata grouping**

(30) Priority: 04.02.2009 US 365566
(71) Applicant: Hitachi Ltd., Chiyoda-ku Tokyo (JP)
(72) Inventor: Kaneda, Yasunori, Tokyo 100-8220 (JP)
(74) Representative: Moore, Graeme Patrick

(57) **Abstract**

The system is composed of: identifier generation program or logic, identifier confirm program or logic, plural identifier table and metadata mapping table. Data streams or data blocks, files are stored in the data storage system with metadata. The metadata includes additional information of the data and files. For example application, creator, timestamp, OS type, and the like. Data storage system or backup appliance with this invention can have plural groups which are related to the metadata. Each group has an identifier table so that eliminating duplicated data is executed within the group.

## Description

### DESCRIPTION OF THE INVENTION

### Field of the Invention

This invention generally relates to the method and apparatus for eliminating duplicated data blocks or files for efficiently using storage capacity in the data storage systems. Specifically, this invention relates to fast finding the duplicated data blocks and files by means of metadata grouping.

### Description of the Related Art

Deduplication is a function designed to eliminate duplicated data stream, data block or files are implemented on data storage systems and backup appliances in order to provide highly efficient data preservation in data storage systems. In one implementation, in order to eliminate duplicated data, an identifier is generated from the data itself. The identifier can be generated as a hash or MD5, SHA (Secure Hash Algorithm). When the data storage system receives the data, the identifier is calculated. The data storage system then checks if the same identifier has already been stored in the identifier table. If the same identifier is found in the identifier table, the received data is not preserved in the data storage system. In the case of not finding the same identifier in the identifier table, the received data is preserved. It should be noted that utilization of hash with enough bit length, for instance 256 bits and more, rarely causes conflicts. To manage large amounts of data, a large number of identifier values must be also calculated and otherwise managed. For this reason, it can take a long time to confirm the identifier at data storage system with very large amount of storage capacity.

For example, US patent No. 6,928,526, titled "Efficient Data Storage System" discloses a method for eliminating the duplicated data. Data is eliminated by means of the identifier, which is generated using the data itself. However, the conventional technology fails to provide methods and systems reducing CPU time for confirming the identifier at data storage system by defining plural groups, which are related to metadata.

### SUMMARY OF THE INVENTION

Embodiments of the present invention address one or more of the foregoing deficiencies of the prior art and provide methods and apparatus for reducing the CPU time for confirming the identifier in a data storage system or backup appliance with duplicated data eliminating function.

In accordance with one aspect of the inventive methodology, there is provided a storage system including a data storage volume; a memory storing metadata associated with a data storage volume; a network interface configured to connect the storage system with a host computer; and a central processing unit. The storage system calculates an identifier from data received from the host computer, and determines if the data is stored in the data storage volume by the identifier and the metadata.

In accordance with another aspect of the inventive methodology, there is provided a storage system including a data storage volume; a memory storing metadata associated with a data storage volume; a network interface configured to connect the storage system with a host computer; and a central processing unit. The storage system calculates an identifier from data in an object received from the host computer, and determines if the data is stored in the data storage volume by the identifier, the metadata stored in the memory and metadata in the object.

In accordance with yet another aspect of the inventive methodology, there is provided a method performed in a storage system including multiple data storage units, the multiple data storage units being divided into multiple chunks forming a chunk pool; a network interface configured to connect the storage system with a host computer; and a storage controller including a central processing unit and a memory. The inventive method involves: provisioning a data storage volume and making the data storage volume available to the host computer via the network interface; upon receipt of a write command directed to the data storage volume from the host computer, calculating an identifier corresponding to the data associated with the write command; grouping the identifier based on metadata into at least one identifier group; confirming uniqueness of the identifier within the identifier group associated with the metadata; and if the identifier is unique within the identifier group, allocating at least one chunk from the chunk pool to the data storage volume and storing the data associated with the write command in the allocated at least one chunk.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:

Fig. 1(a) and 1(b) illustrate an exemplary embodiment of the information in which the concepts of this invention may be applied.

Fig. 2 illustrates an exemplary embodiment of the data volume management table.

Fig. 3 illustrates an exemplary embodiment of the chunk table.

Fig. 4 illustrates chunk identification using a unique chunk identification number.

Fig. 5 illustrates an exemplary embodiment of the chunk state table.

Fig. 6(a) and 6(b) illustrate an exemplary embodiment of the metadata mapping table.

Fig. 7 illustrates an exemplary embodiment of the identifier table.

Fig. 8 illustrates an exemplary embodiment of the volume creation process.

Fig. 9 illustrates an exemplary embodiment of the metadata mapping table initialization process.

Fig. 10 illustrates an exemplary embodiment of the write operation.

Fig. 11(a) illustrates an exemplary embodiment of the write command.

Fig. 11(b) illustrates an exemplary embodiment of the read command.

Fig. 12 illustrates an exemplary embodiment of the read operation.

Fig. 13(a) and 13(b) illustrate another exemplary embodiment of the information system in which the method of this invention can be applied.

Fig. 14 illustrates another exemplary embodiment of the file management table.

Fig. 15(a) and (b) illustrate another exemplary embodiment of the metadata mapping table.

Fig. 16 illustrates another exemplary embodiment of the write operation.

Fig. 17(a) illustrates another exemplary embodiment of the write command.

Fig. 17(b) illustrates another exemplary embodiment of the read command.

Fig. 18 illustrates another exemplary embodiment of the read operation.

Fig. 19 illustrates another exemplary embodiment of the write operation.

Fig. 20 illustrates another exemplary embodiment of the file management table.

Fig. 21 illustrates an exemplary embodiment of the screen displayed by the identifier table consolidation program.

Fig. 22 illustrates an exemplary embodiment of the identifier table consolidation process.

Fig. 23 illustrates modified chunk tables for the write operation.

Fig. 24 illustrates a write process, wherein the column is evaluated asynchronously after receiving write command.

Fig. 25 illustrates an exemplary embodiment of the background deduplication process.

Fig. 26 illustrates an exemplary embodiment of a computer platform upon which the inventive system may be implemented.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense.

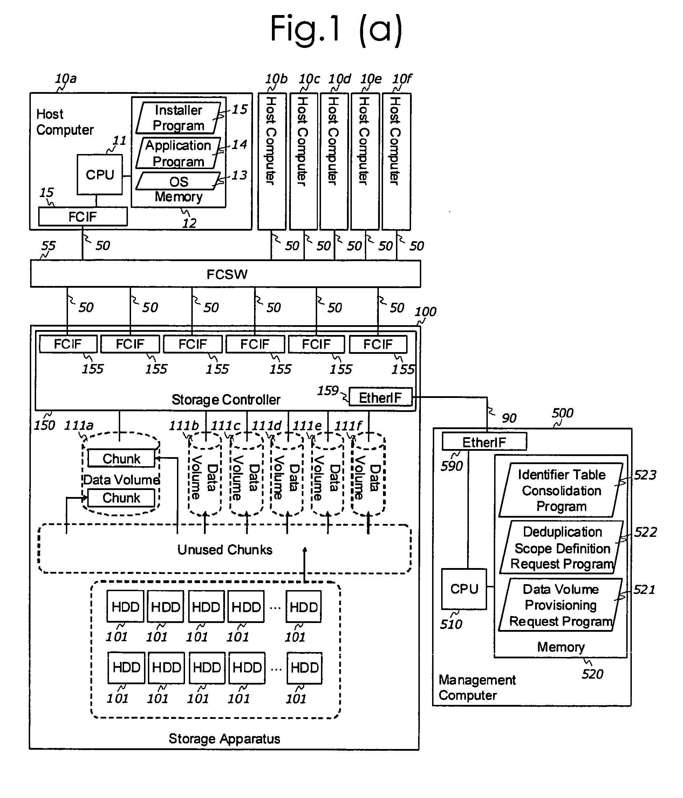

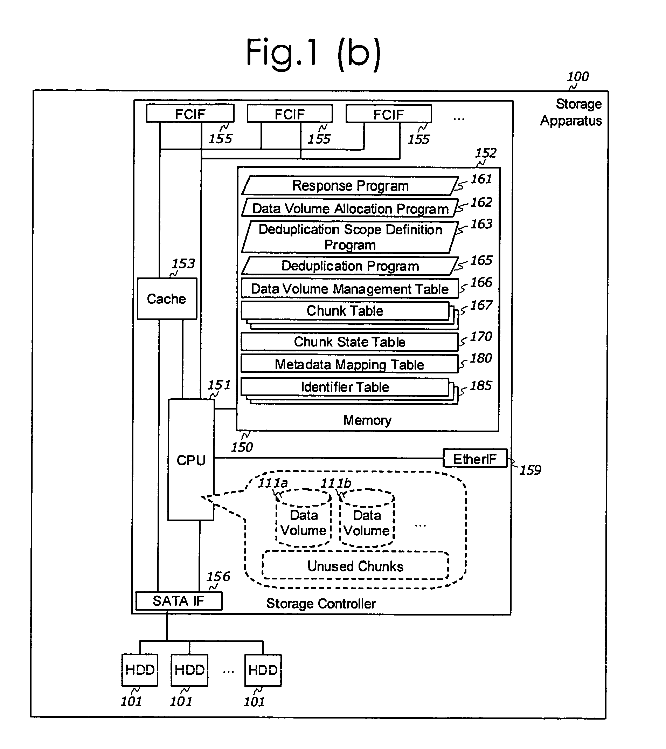

System configuration of the first embodiment of the invention will now be described. Fig. 1 illustrates an exemplary embodiment of the information system in which the method of this invention can be applied. The information system of the first embodiment is composed at least of the Host computer 10, Storage apparatus 100, Management Computer 500, Data Network 50 and Management Network 90.

Host computer 10 will now be described. At least one host computer 10 is connected to the storage apparatus 100 via data network 50. In this particular embodiment, six host computers 10a, 10b, 10c, 10d, 10e and 10f are connected. At least one OS 13 is executed on the host computer. An application program 14 may be executed on the OS 13. Files and data for the OS 13 and the application program 14 are stored in data volumes, which are provided by the storage apparatus 100. The OS 13 and the application program 14 issue write and/or read commands to the storage apparatus 100. Host computers 10a, 10b and 10c are running OS type A. Host computers 10d, 10e and 10f are running OS type B. The OS type may be defined using vendor's OS name and version number.

Storage apparatus 100 will now be described. The information system includes at least one storage apparatus 100, which is composed of storage controller 150 and one or more HDDs 101. The storage apparatus 100 provides one or more data volumes 111 to the host computers 10.

Management Computer 500 will now be described. The information system includes at least one management computer 500, which is connected the storage apparatus 100 via the management network 90.

Data network 50 will now be described. The host computer 10 and the storage apparatus 100 are connected via data network 50. The data network 50 in this embodiment is implemented using a Fibre Channel protocol. However other network interconnects, such as Ethernet and Infiniband can be used for this purpose as well. Network switches and hubs can be used for connecting entities of the Data network 50 to each other. In Fig. 1, Fibre Channel Switch 55 (FCSW 55) is used for connecting entities of the Data network 50 to each other. To this end, the host computer 10 and the storage apparatus 100 incorporate one or more Fibre Channel interface board (FCIF) for connecting to the Fibre Channel data network 50.

The Management network 90 will now be described. The storage apparatus 100 are connected to the management computer 500 via management network 90. The management network 90 in this embodiment is implemented using Ethernet protocol. However, other network interconnects or other connecting methods can be used for this purpose as well. Network switches and hubs can be used for connecting entities of the Management network 90 to each other. In the embodiment of the invention, the storage apparatus 100 and the management computer 500 have one or more Ethernet interface board (EtherIF) for connecting to the Ethernet management network 90.

Host Computer 10 will now be described in detail. The host computer 10 is composed of: CPU 11 for executing programs stored in memory 12; Memory 12 for storing the programs and data; and FCIF 15 for connecting to the data network 50. In this embodiment, the CPU11 executes at least three programs stored in the memory 12.

In this embodiment of the invention, the memory 12 stores: Operating system program 13 (OS 13); Application program 14; and Installer program 15 for installing OS 13 and/or Application program 14.

The Management Computer 500 will now be described in detail. The management computer 500 is composed of: CPU 510 for executing programs stored in memory 520; Memory 520 for storing the programs and data; and EtherIF 590 for connecting to the management network 90.

The CPU510 executes at least three programs stored in the memory 520. In this embodiment memory 520 stores: Data volume provisioning request program 521 for issuing a data volume provisioning request to the storage apparatus 100; Deduplication scope definition request program 522 for issuing a deduplication scope definition request to the storage apparatus 100; and Identifier table consolidation program 523 for showing a management screen, calculating a ratio of difference of two identifier tables and issuing an identifier table consolidation request to the storage apparatus 100.

Storage Apparatus 100 will now be described in detail. The storage apparatus 100 is composed of: one or more HDD 101 for storing data and one or more storage controllers 150 for providing data volumes to the host computers. The storage controller 150 is composed of: CPU 151 for executing programs stored in memory 152; Memory 152 for storing programs and data; FCIF 155 for connecting to the data network 50; SATA IF 156 for connecting to the HDD 101 (if HDD has another interface such as FC, SCSI SAS, appropriate interface should be implemented.); Cache 153 for storing data received from the host computer and read from the HDDs; and EtherIF 159 for connecting to the management network 90.

CPU 151 executes at least four programs stored in memory 152. In this embodiment memory 152 stores: Response program 161 for responding to at least read/write commands from the host computer 10; Data volume allocation program 162 for creating volumes and allocating it to the host computer 10; Deduplication scope definition program 163 for updating the metadata mapping table; and Deduplication program 165 for calculating message digest 5 (MD5) from data which are transferred from host computer 10 and confirming whether same identifier has been already stored in the identifier table. Deduplication program 165 stores the data if the same identifier is not found. Deduplication program 165 does not store the data if the same identifier is found. As would be appreciated by those of skill in the art, the inventive system is not limited to only MD5 algorithm. Any other appropriate hash or digest function, such as SHA, may be applied to the present invention as well.

Calculating MD5 and confirming identifier functions in the deduplication program 165 may be implemented as hardware logic on Gate Array or FPGA (Field Programmable Gate Array) for accelerating the calculation and the confirmation.

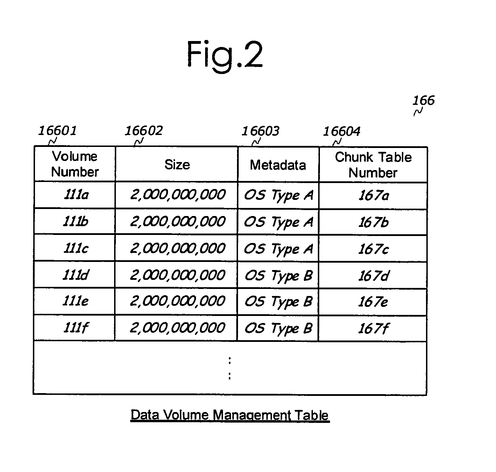

Data Volume Management Table will now be described in detail. Data volume management table 166 manages created volumes. As shown in Fig. 2, the data volume management table 166 is composed of: "Volume Number" row 16601 for storing volume number; "Size" row 16602 for storing data volume size (number of blocks); "Metadata" row 16603 for storing metadata giving at volume creation from the management computer 500; and "Chunk Table Number" row 16604 for storing chunk table number.

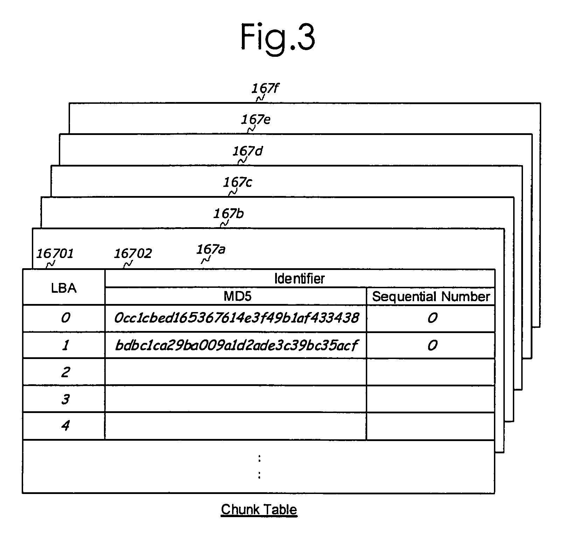

Chunk Table will now be described in detail. Chunk table 167 stores information on the relationship between LBA (Logical Block Address) of data volume and identifier. The identifier is composed of MD5 and another sequential number. The sequential number is used when MD5 conflict is occurred. Each data volume has own chunk table 167. LBA is used for read/write operation by the host computer for specifying the access block location. As shown in Fig. 3, the chunk table 167 is composed of: "LBA" row 16701 for storing LBA and "Identifier" row 16702 for storing the identifier.

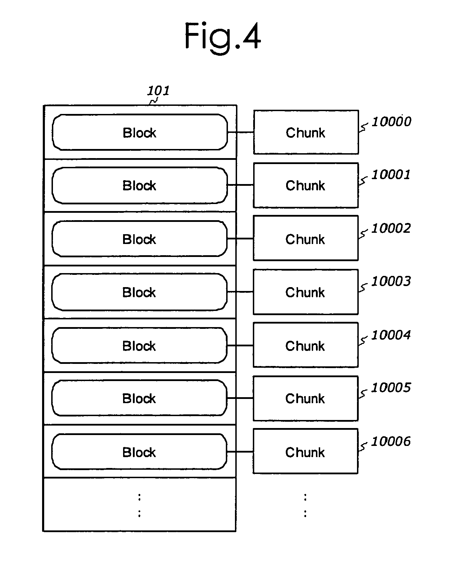

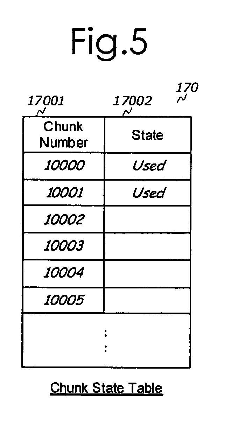

Chunk State Table will now be described in detail. HDD in the storage apparatus 100 is composed of multiple data blocks. Size of the data block is usually 512 bytes in modern products. In this embodiment, chunk is composed of one data block. Therefore, in this embodiment, the size of the chunk is 512 bytes. However, any other chunk size can be used as well. Each chunk has a unique number for identifying one by one as shown in Fig. 4. Chunk state table 170 manages the usage of the chunks. Fig. 5 illustrates an exemplary embodiment of the chunk state table 170 in this embodiment. The exemplary embodiment of the chunk state table is composed of: "Chunk Number" row 17001 for storing chunk number and "State" row 17002 for storing state information indicating whether the chunk is used or not. When data is being stored, the Deduplication program 165 seeks unused chunks using the chunk state table 170.

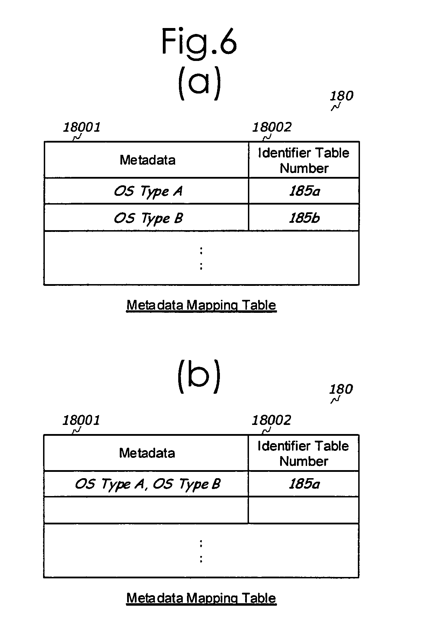

Metadata Mapping Table will now be described in detail. Metadata mapping table 180 stores information on the relationship between metadata and identifier table 185. Data written to the data volume are confirmed by the identifier table which is specified at the metadata mapping table 180. As shown in Fig. 6, the metadata mapping table 180 is composed of: "Metadata" row 18001 for holding metadata which is assigned to volume and "Identifier Table Number" row 18002 for holding identifier table number.

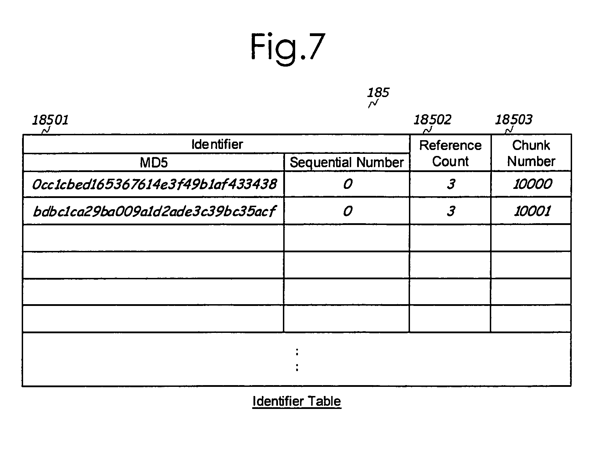

Identifier Table will now be described in detail. Identifier table 185 manages identifier of the chunk, reference count and chunk number. The identifier is composed of MD5 and another sequential number. The sequential number is used when MD5 conflict is occurred. As shown in Fig. 7, the identifier table 185 is composed of: "Identifier" row 18501 for storing identifier; "Reference Count" row 18502 for storing reference count which is number of references from the chunk tables 167; and "Chunk Number" row 18503 for storing chunk number which data is preserved.

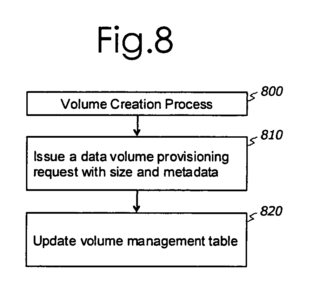

Volume Creation process will now be described in detail. Volume creation process 800 is explained with reference to Fig. 8.

STEP 810: The data volume provisioning request program 521 issues a data volume provisioning request with size (number of blocks) and metadata to the data volume allocation program 162 on the storage controller 150. (Metadata is such as "OS Type A", "OS Type B", and so on.) Any type of metadata may be specified by the Administrator.

STEP 820: The data volume allocation program 162 updates the data volume management table 166. Fig. 2 illustrates the case, wherein six volumes creation has been completed. The data volume 111 a, 111 b and 111 c are created with "OS Type A" metadata. The data volume 111d, 111e and 111f are created with "OS Type B" metadata.

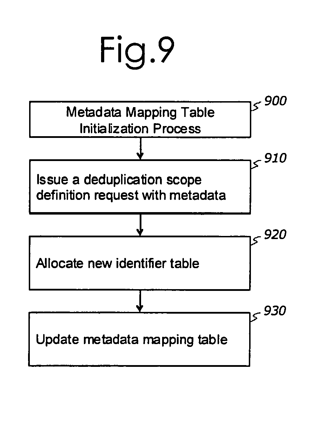

The process for initializing Metadata Mapping Table will now be described in detail. Metadata mapping table initialization process 900 is explained with reference to Fig. 9.

STEP 910: The deduplication scope definition request program 522 issues a deduplication scope definition request with metadata to the deduplication scope definition program 163 on the storage controller 150.

STEP 920: The deduplication scope definition program 163 receives new metadata and the deduplication scope definition program 163 allocates new identifier table 185 for the received metadata.

STEP 930: The deduplication scope definition program 163 updates the metadata mapping table. Fig. 6 (a) illustrates the case, wherein two metadata ("OS Type A" and "OS Type B") have been received. The identifier table 185a is allocated for metadata "OS Type A". The identifier table 185b is allocated for metadata "OS Type B".

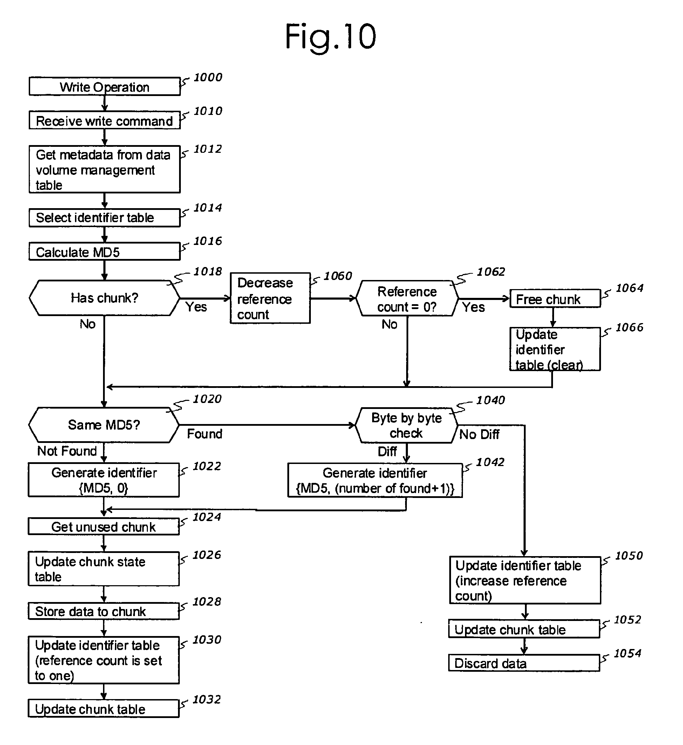

Write Operation will now be described in detail. Write operation 1000 is explained with reference to Fig. 10. Write operations are executed while OS and application software are installed and executed. In this embodiment, OS type A is installed on the data volumes 111 a, 111 b and 111 c. OS type B is installed on the data volumes 111d, 111e and 111f. It should be noted that a large number of write operations are executed during the actual OS installation. Fig. 10 illustrates an exemplary process flow in the response program 161 and the deduplication program 165. The installer program 15 on the host computer 10 issues write command and data to the volume 111. In this embodiment, the host computer 10a uses the data volume 111 a, while the host computer 10b uses the data volume 111 b, etc.

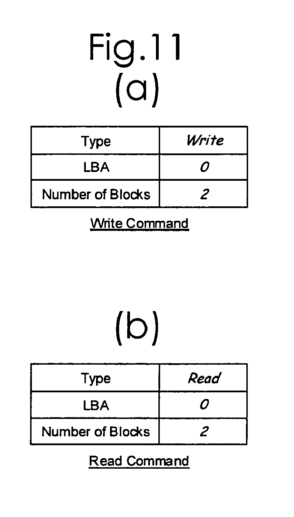

STEP 1010: Write command and data are received. The write command contains the LBA and information on the number of blocks. Fig. 11 (a) illustrates a write command. The write command includes command type (=write), LBA (=data location) and the information on the number of blocks (=size of data).

STEP 1012: The metadata of the volume is obtained from the data volume management table 166. (If current data volume which receives the write command is 111 a, the metadata is "OS Type A" (see Fig. 2).)

STEP 1014: An identifier table is selected from the metadata mapping table 180 according to the metadata. (If current data volume which receives the write command is 111a, the identifier table 185a is selected because the metadata is "OS Type A".) The following steps are executed for each block:

STEP 1016: MD5 value is calculated from the received data.

STEP 1018: Check is performed by referring to the chunk table if current data location specified by the write command has an allocated chunk. If a chunk is already allocated, the process proceeds to step 1060. If a chunk is not allocated, the process proceeds to step 1020.

STEP 1020: Columns which have the same MD5 value from the selected identifier table are enumerated. If the same MD5 value is found, the process proceeds to step 1040. If the same MD5 value is not found, the process proceeds to step 1022.

STEP 1022: An identifier is generated. The identifier is the combination of the MD5 value and zero.

STEP 1024: Get unused chunk according to the chunk state table 170.

STEP 1026: Update the chunk state table 170 for indicating the usage.

STEP 1028: Store the data to the chunk.

STEP 1030: Update the selected identifier table 185. The generated identifier (at step 1022) is stored. The reference count is set to one. The chunk number (got at step 1022) is stored.

STEP 1032: Update the chunk table 167. (If current data volume which receives the write command is 111a, the chunk table 167a is updated.) The generated identifier is stored at current LBA column.

STEP 1040: Execute byte by byte data check for avoiding MD5 conflict. If data are not different, the operation proceeds to step 1050. If data is different (MD5 conflict), proceed to step 1042. (If plural same MD5 are found, byte by byte check is executed per each.)

STEP 1042: Generate identifier. Identifier is combination of MD5 and new sequential number which is next number of current max number. (If one same MD5 is found even if data are different, the sequential number is one. If two same MD5 is found even if data are different, the sequential number is two.) Proceed to step 1024. MD5 rarely conflict. So step 1042 is rare case.

STEP 1050: Update the selected identifier table 185. Increase reference count in the identifier table 185 according to the identifier.

STEP 1052: Update the chunk table 167. The identifier is stored corresponding to LBA.

STEP 1054: Discard the data.

STEP 1060: Decrease reference count in the identifier table 185 according to the identifier.

STEP 1062: Check if the reference count is zero. If reference count is zero, proceed to step 1064. If reference count is non zero, proceed to step 1020.

STEP 1064: Free the chunk.

STEP 1066: Update the selected identifier table 185. Column with the identifier is cleared from the selected identifier table. Proceed to step 1020.

As mentioned above, specific identifier table is used according to metadata which is assigned to the data volume. One identifier table can be used for plural data volumes. The data volumes can preserve variety of OS. However one identifier table becomes huge because variety OS contains variety of data. It takes long time to execute identifier confirmation at one huge identifier table. In this embodiment, plural identifier tables are used. One identifier table is used for OS type A. The other is used for OS type B. Each identifier table keeps smaller than a case of one identifier table for two OS. As a result of the separation by metadata, CPU time for executing identifier confirmation becomes shorter. Performance of read/write access of the data storage apparatus with this invention is improved. Any algorithm for confirming identifier, such as binary-tree, can be used.

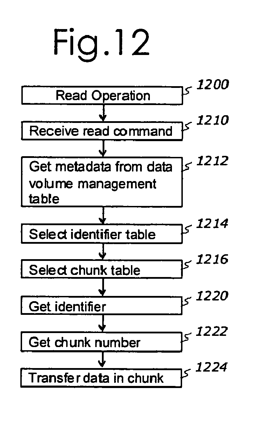

Read Operation will now be described in detail. Read operation 1200 is explained with Fig. 12. Read operations are executed while OS and application are executed. OS 13 and the application program 14 on the host computer 10 issues read commands to the volume 111. In this embodiment, the host computer 10a uses the data volume 111 a, the host computer 10b uses the data volume 111 b, ...

STEP 1210: Read command is received. The read command contains the LBA and number of blocks. Fig. 11 (b) shows a read command. The read command includes command type (=read), LBA (=data location) and number of blocks (=size of data).

STEP 1212: Get metadata of the volume from the data volume management table 166. (If current data volume which receives the read command is 111 a, the metadata is "OS Type A" (Fig. 2).)

STEP 1214: Select an identifier table from the metadata mapping table 180 according to the metadata. (If current data volume which receives the read command is 111a, the identifier table 185a is selected because the metadata is "OS Type A".)

STEP 1216: Select a chunk table 167. (If current data volume which receives the read command is 111 a, the chunk table 167a is selected.) Following steps are executed per a block.

STEP 1220: Get an identifier from the selected chunk table 167 corresponding to LBA.

STEP 1222: Get a chunk number from the identifier table 185 corresponding to the identifier.

STEP 1224: Transfer data in the chunk specified the chunk number to the host computer.

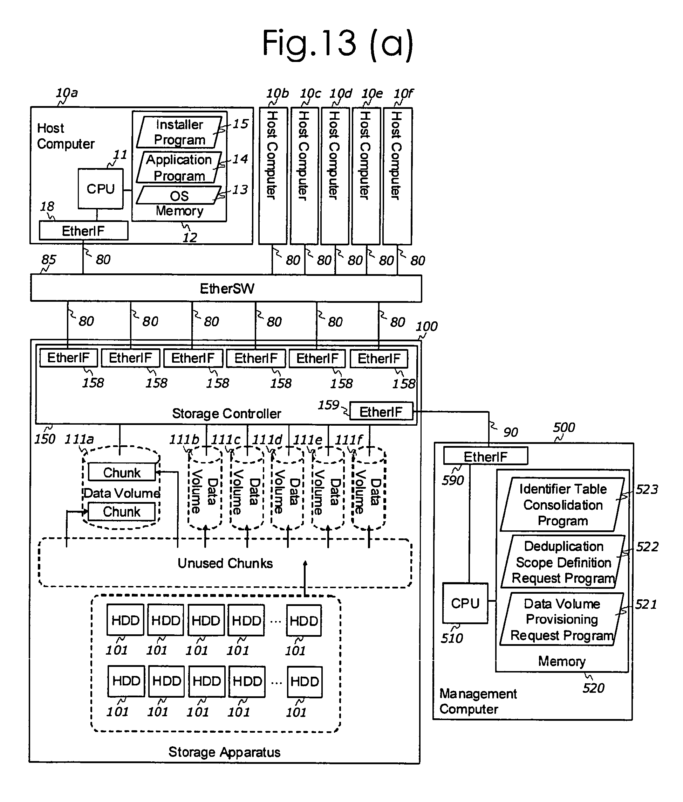

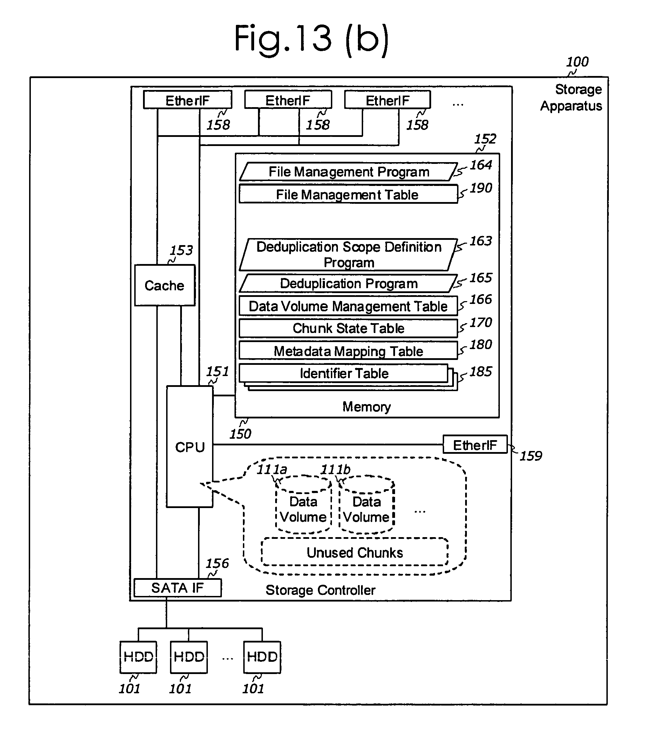

Second embodiment of the invention will now be described in detail. Fig. 13 shows an example of the information system overview in which the method of this invention applied. Difference between 1st embodiment and 2nd embodiment:

Storage apparatus 100 has file management program 164

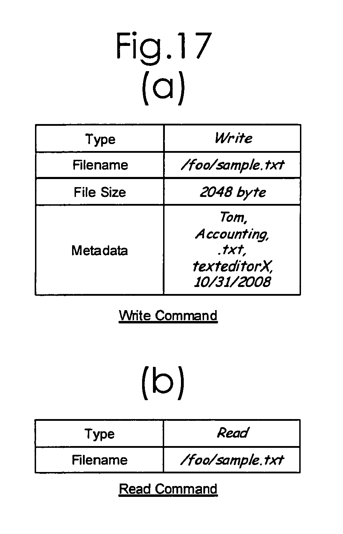

Host computer 10 accesses to the file storage apparatus by file access command (shown in Fig. 17)

Data network is Ethernet. Ethernet switch 85 (EtherSW 85) is used for connecting each other.

The host computer 10 have Ethernet interface board 18 (EtherIF 18) for connecting the Ethernet data network 80.

The storage apparatus 100 have Ethernet interface board 158 (EtherIF 158) for connecting the Ethernet data network 80.

The file management program 164 uses a file management table 190. The file management table uses for managing filename, file size, identifier and metadata.

Each column in the identifier table 185 can hold plural chunk numbers.

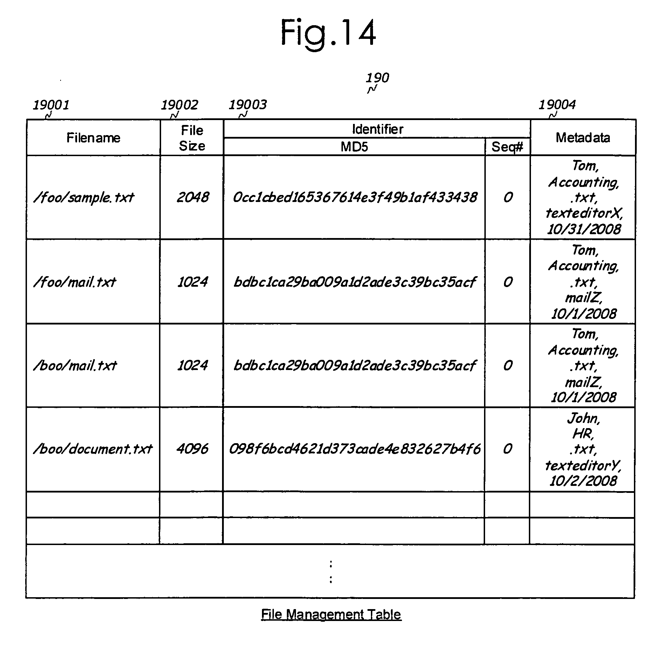

File Management Table of the second embodiment will now be described In detail. As shown in Fig. 14, the file management table 190 is composed of: "Filename" row 19001 for holding filename (in this embodiment, filename is composed of directory name and filename); "File Size" row 19002 for holding file size; "Identifier" row 19003 for holding identifier. The identifier is composed of MD5 and another sequential number and "Metadata" row 19004 for holding metadata. Plural metadata can be held corresponding to one filename.

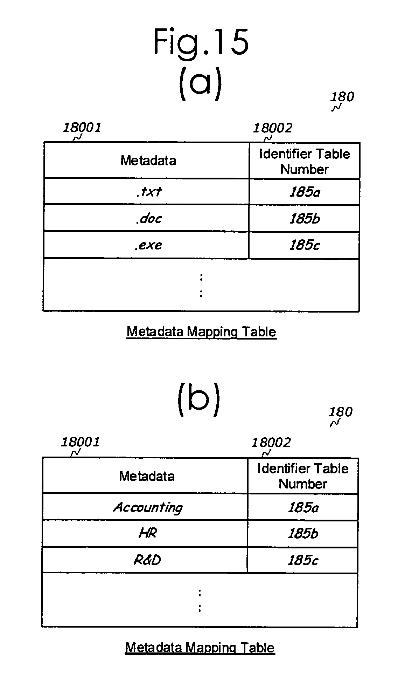

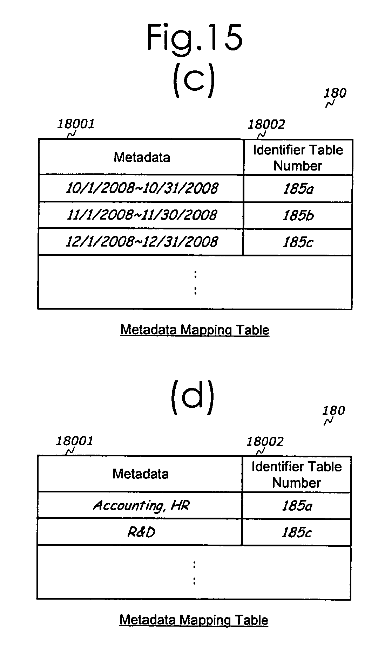

Initializing Metadata Mapping Table will now be described In detail. Initializing the metadata mapping table process is same as 1st embodiment. However variety of metadata can be used such as creator name, group name, organization name, creation time stamp, created application name, file type, host computer name (physical and/or virtual) and so on. Fig. 15 shows example of metadata mapping table 180 in this embodiment. Fig. 15 (a) shows a metadata mapping table by file types. Fig. 15 (b) shows a metadata mapping table by organization name. Fig. 15 (c) shows a metadata mapping table by creation time stamp.

Write Operation of the second embodiment will now be described in detail.

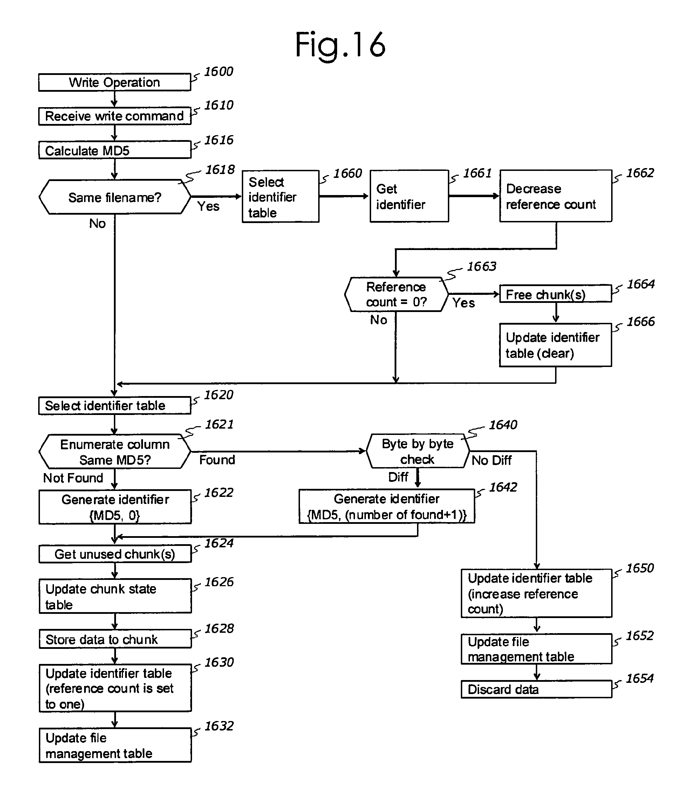

Write operation 1600 is explained with Fig. 16. Write operations are executed from OS 13 and application software 14.

STEP 1610: Write command and data are received. The write command contains a filename, file size and metadata. Fig. 17 (a) shows a write command.

STEP 1616: Calculate MD5 from the data.

STEP 1618: Check if same filename has been already existed in the file management table 190. If same filename is found, proceed to 1660. If same filename is not found, proceed to step 1620.

STEP 1620: Select an identifier table from the metadata mapping table 180 according to metadata which is held in the write command.

STEP 1621: Enumerate columns which have same MD5 value from the selected identifier table. If same MD5 is found, proceed to step 1640. If same MD5 is not found, proceed to step 1622.

STEP 1622: Generate identifier. Identifier is combination of MD5 and zero.

STEP 1624: Get unused chunk(s) according to the chunk state table and size of the file (size is converted to number of chunks).

STEP 1626: Update the chunk state table 170 for indicating the usage.

STEP 1628: Store the data to the chunk(s).

STEP 1630: Update the selected identifier table 185. The generated identifier is stored. The reference count is set to one. The chunk number(s) (got at step 1624) is(are) stored.

STEP 1632: Update the file management table 190. The filename, file size, the generated identifier (at step 1622) and metadata are stored.

STEP 1640: Execute byte by byte data check for avoiding MD5 conflict. If data are not different proceed to step 1650. If data is different (MD5 conflict), proceed to step 1642. (If plural same MD5 are found, byte by byte check is executed per each.)

STEP 1642: Generate identifier. Identifier is combination of MD5 and new sequential number which is next number of current max number. (If one same MD5 is found even if data are different, the sequential number is one. If two same MD5 is found even if data are different, the sequential number is two.)

STEP 1650: Update the selected identifier table 185. Increase reference count in the identifier table 185 according to the identifier.

STEP 1652: Update the file management table 190. The filename, file size, the generated identifier and metadata are stored.

STEP 1654: Discard the data.

STEP 1660: Select an identifier table according to metadata held in the file management table.

STEP 1661: Get an identifier from the file management table according to the filename.

STEP 1662: Decrease reference count in the identifier table 185 according to the identifier.

STEP 1663: Check if the reference count is zero. If reference count is zero, proceed to step 1664. If reference count is non zero, proceed to step 1620.

STEP 1664: Free chunk(s) which chunk number is(are) held in the column with the identifier.

STEP 1666: Update the selected identifier table 185. The column with the identifier is cleared from selected identifier table. Proceed to step 1620.

As mentioned above, specific identifier table is used according to metadata which is assigned to the file. In this embodiment, plural identifier tables are used also according to the metadata mapping table 180. Each identifier table keeps smaller than a case of one identifier table for all files. As a result of the separation by metadata, CPU time for executing identifier confirmation becomes shorter. Performance of read/write access of the data storage apparatus with this invention is improved.

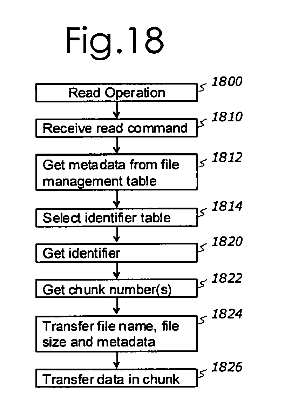

Read Operation of the second embodiment will now be described in detail. Read operation 1800 is explained with Fig. 18. Read operations are executed from OS 13 and application software 14.

STEP 1810: Read command is received. The read command contains a filename. Fig. 17 (b) shows a read command.

STEP 1812: Get metadata of the file from the file management table 190 according to the filename.

STEP 1814: Select an identifier table from the metadata mapping table 180 according to the metadata.

STEP 1820: Get an identifier from the file management table 190 according to the filename.

STEP 1822: Get chunk number(s) from the identifier table 185 according to the identifier.

STEP 1824: Transfer filename, file size and metadata to the host computer.

STEP 1826: Transfer data in the chunk(s) specified the chunk number(s) to the host computer.

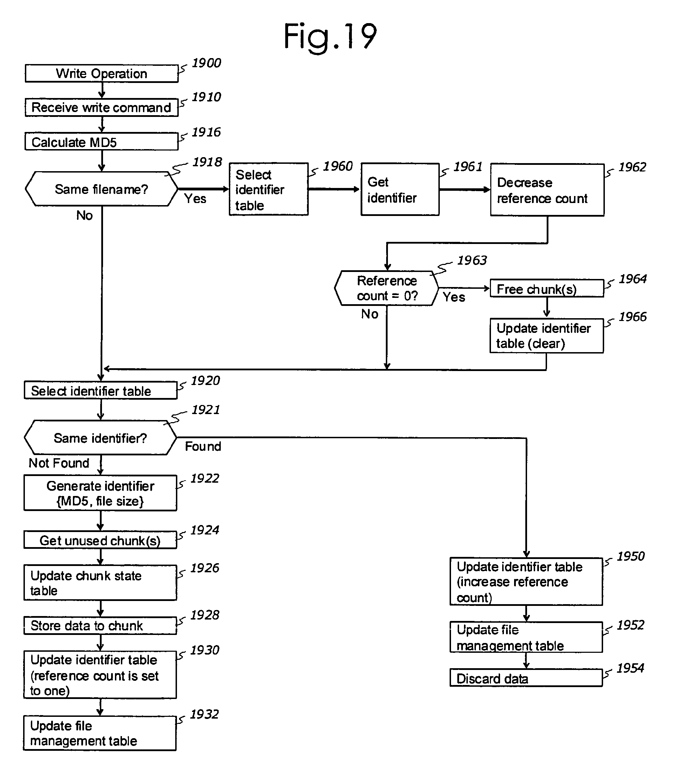

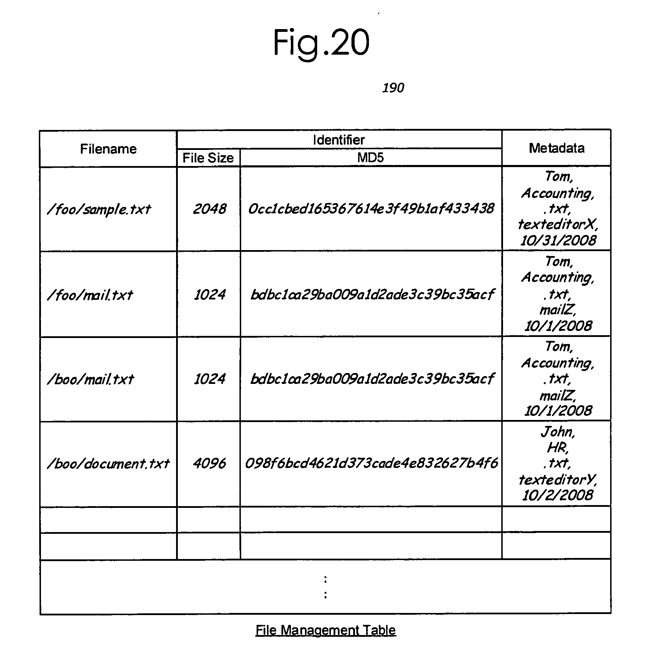

Write operation variation will now be described in detail. Another embodiment of the write operation 1900 is explained in with reference to Fig. 19. Write operations are executed from OS 13 and application software 14. In this write operation, files are deduplicated by MD5 and size of the file. The sequential number which is part of an identifier does not used. An identifier is composed of MD5 and size of the file. The file management table 190 shown in Fig. 20 is used for the write operations.

STEP 1910: Write command and data are received. The write command contains a filename, file size and metadata. Fig. 17 (a) shows a write command.

STEP 1916: Calculate MD5 from the data.

STEP 1918: Check if same filename has been already existed in the file management table 190. If same filename is found, proceed to step 1960. If same filename is not found, proceed to step 1920.

STEP 1920: Select an identifier table from the metadata mapping table 180 according to metadata which is held in the write command.

STEP 1921: Confirm if same identifier (MD5 value, size of the file) has been existed in the selected identifier table. If same identifier is found, proceed to step 1950. If same identifier is not found, proceed to step 1922.

STEP 1922: Generate identifier. The identifier is combination of MD5 and file size.

STEP 1924: Get unused chunk(s) according to the chunk state table and size of the file (size is converted to number of chunks).

STEP 1926: Update the chunk state table 170 for indicating the usage.

STEP 1928: Store the data to the chunk(s).

STEP 1930: Update the selected identifier table 185. The identifier (MD5 value, size of the file) is stored and the chunk number(s) is(are) stored. The reference count is set to one.

STEP 1932: Update the file management table 190. The filename, file size, MD5 and metadata are stored.

STEP 1950: Update the selected identifier table 185. Increase reference count in the identifier table 185 according to the identifier.

STEP 1952: Update the file management table 190. The filename, file size, MD5 and metadata are stored.

STEP 1954: Discard the data.

STEP 1960: Select an identifier table according to metadata held in the file management table.

STEP 1961: Get an identifier (MD5 value and size of the file) according to the filename.

STEP 1962: Decrease reference count in the identifier table 185 according to the identifier.

STEP 1963: Check if the reference count is zero. If reference count is zero, proceed to step 1964. If reference count is non zero, proceed to step 1920.

STEP 1964: Free the chunk(s) which chunk number is(are) held in the column with the identifier.

STEP 1966: Update the selected identifier table 185. The column with the identifier is cleared from selected identifier table. Proceed to step 1920.

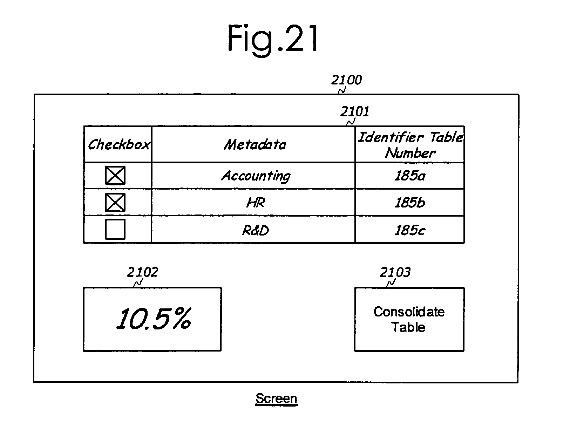

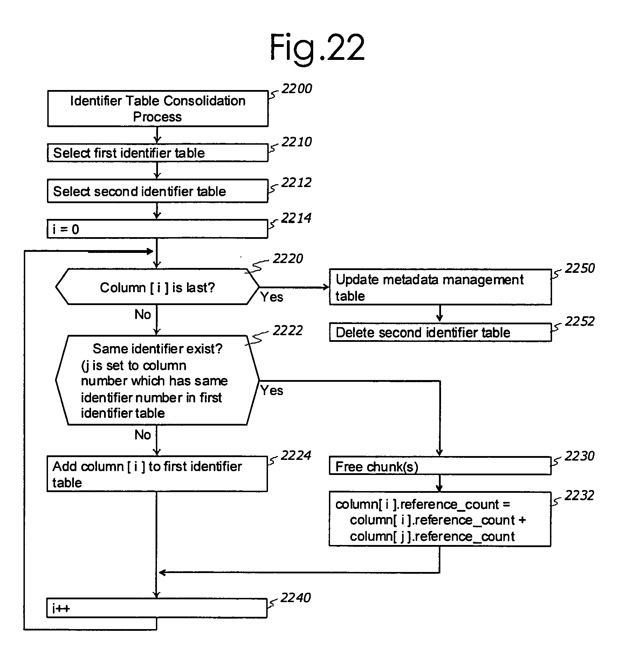

Identifier table consolidation will now be described in detail. The management computer 500 may have an identifier table consolidation program 523. The identifier table consolidation program 523 displays screen 2100 shown in Fig. 21. Metadata and the identifier table numbers are shown in a table 2101 on the screen 2100. An administrator can choose two tables for comparing difference by checking checkboxes. In Fig. 21, metadata "accounting" and "HR" are selected. The identifier table consolidation program checks correlation between two identifier tables and calculates the ratio of the difference. The ratio of the difference is displayed in the pane 2102. In the case of big difference, two tables should not be consolidated. The consolidation may cause longer latency. In the case of small difference, two tables may be consolidated. The consolidation makes free chunks due to deduplication. An administrator can push the button 2103 for consolidating the two tables. The identifier table consolidation program 523 issues an identifier table consolidation request to the storage apparatus 100. The identifier table consolidation process could be automated without the request form the administrator. The predetermined threshold value could be set by the administrator and compared with the ratio to determine the starting of identifier table consolidation process. It should also consider the usage level of the storage since ratio would be stable amount if there is sufficient data in the storage. The storage apparatus 100 starts an identifier table consolidation process shown in the Fig. 22.

STEP 2210: Select fist identifier table specified in the identifier table consolidation request.

STEP 2212: Select second identifier table specified in the identifier table consolidation request.

STEP 2214: Initialize i = 0.

STEP 2220: Skip to 2250 unless column [ i ] is last column.

STEP 2222; Evaluate identifier (MD5 value and size of the file) in column [ i ] exits in the first identifier table. If same identifier is existed, proceed to step 2230. (j is set to column number which holds the identifier in the first identifier table).

STEP 2224: The column [ i ] is added to the first identifier table.

STEP 2230: Free chunk(s) which chunk number is(are) held in the column [ i ].

STEP 2232: Add the reference count value at the column [ i ] in the second identifier table to the reference count at the column [ j ] in the first identifier table in the following manner: (column [ j ].reference count = column [ j ].reference count + column [ i ].reference count).

STEP 2240: Increase i. Proceed to step 2220.

STEP 2250: Update the metadata management table. (for example Fig. 15 (a) is updated as Fig. 15 (d))

STEP 2252: Delete the second identifier table.

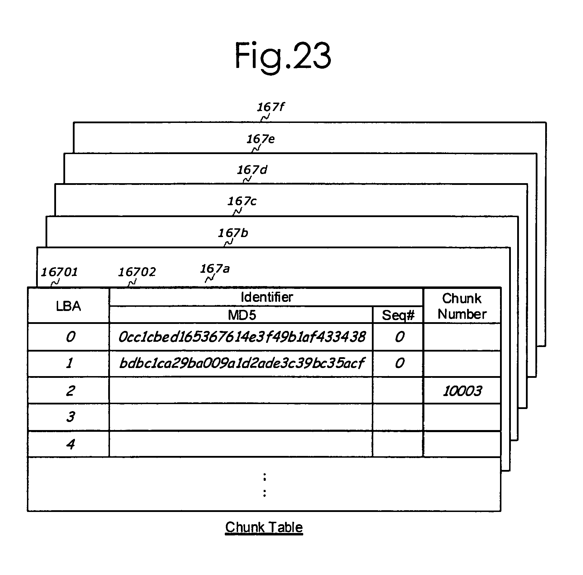

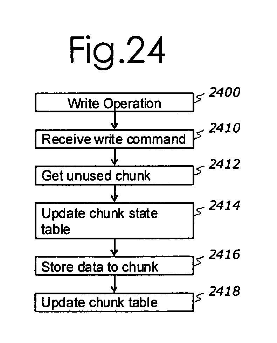

An alternative implementation of the write operation of the first embodiment will now be described. Another embodiment of the write operation 2300 is explained with reference to Fig. 23, 24 and 25. For the write operation, modified chunk tables are shown in Fig. 23. The chunk table stores chunk number information. If a LBA column has a chunk number, it means that data for the LBA temporally stored in a chunk specified with the chunk number. The column will be evaluated asynchronously after receiving write command. The corresponding write process is shown in Fig. 24

STEP 2410: Write command is received. The write command contains the LBA and number of blocks.

STEP 2412: Get unused chunk according to the chunk state table 170.

STEP 2414: Update the chunk state table 170 to indicate that the chunk is being used.

STEP 2416: Store the data to the chunk.

STEP 2418: Update the chunk table. At this time, only chunk number received in step 2412 is stored in the chunk table.

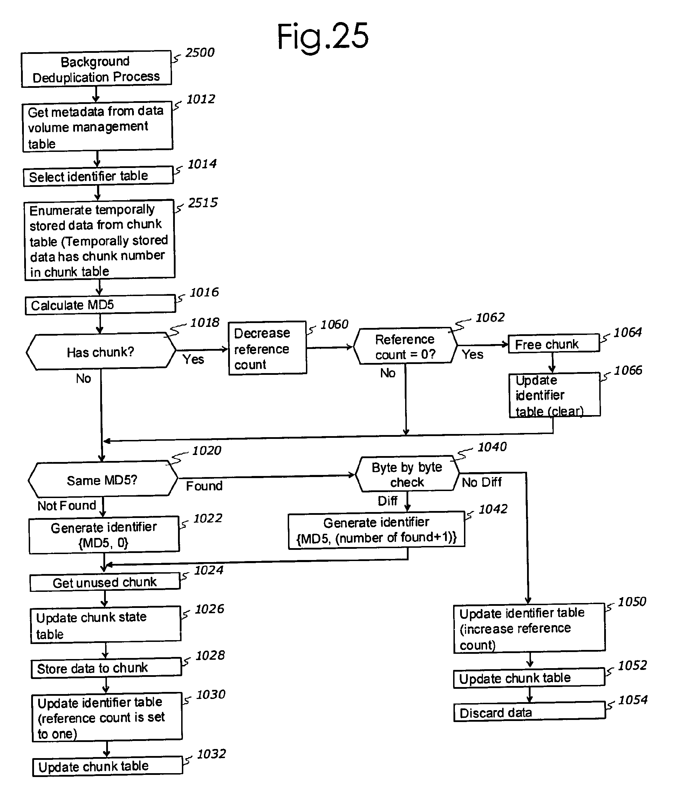

Deduplication evaluation is executed asynchronously after receiving write command. Background deduplication process is shown in Fig. 25. The background deduplication is executed at each data volume periodically. The difference between Fig. 10 and Fig. 25 is only in step 2515.

STEP 2515: Enumerate temporally stored data from the table. Temporally stored data are identified by checking chunk number in the chunk table. The temporally stored data has a chunk number in the chunk table. For example data at LBA 2 is stored in chunk 10003 temporally in Fig. 23. The steps following the step 2515 are executed for each block.

### Exemplary Computer Platform

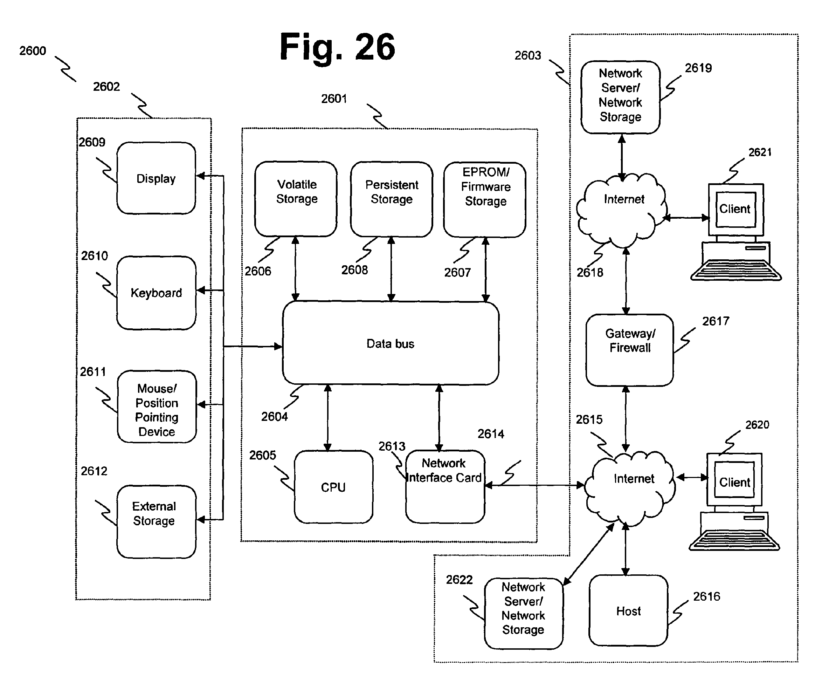

Fig. 26 is a block diagram that illustrates an embodiment of a computer/server system 2600 upon which an embodiment of the inventive methodology may be implemented. The system 2600 includes a computer/server platform 2601, peripheral devices 2602 and network resources 2603.

The computer platform 2601 may include a data bus 2604 or other communication mechanism for communicating information across and among various parts of the computer platform 2601, and a processor 2605 coupled with bus 2601 for processing information and performing other computational and control tasks. Computer platform 2601 also includes a volatile storage 2606, such as a random access memory (RAM) or other dynamic storage device, coupled to bus 2604 for storing various information as well as instructions to be executed by processor 2605. The volatile storage 2606 also may be used for storing temporary variables or other intermediate information during execution of instructions by processor 2605. Computer platform 2601 may further include a read only memory (ROM or EPROM) 2607 or other static storage device coupled to bus 2604 for storing static information and instructions for processor 2605, such as basic input-output system (BIOS), as well as various system configuration parameters. A persistent storage device 2608, such as a magnetic disk, optical disk, or solid-state flash memory device is provided and coupled to bus 2601 for storing information and instructions.

Computer platform 2601 may be coupled via bus 2604 to a display 2609, such as a cathode ray tube (CRT), plasma display, or a liquid crystal display (LCD), for displaying information to a system administrator or user of the computer platform 2601. An input device 2610, including alphanumeric and other keys, is coupled to bus 2601 for communicating information and command selections to processor 2605. Another type of user input device is cursor control device 2611, such as a mouse, a trackball, or cursor direction keys for communicating direction information and command selections to processor 2604 and for controlling cursor movement on display 2609. This input device typically has two degrees of freedom in two axes, a first axis (e.g., x) and a second axis (e.g., y), that allows the device to specify positions in a plane.

An external storage device 2612 may be coupled to the computer platform 2601 via bus 2604 to provide an extra or removable storage capacity for the computer platform 2601. In an embodiment of the computer system 2600, the external removable storage device 2612 may be used to facilitate exchange of data with other computer systems.

The invention is related to the use of computer system 2600 for implementing the techniques described herein. In an embodiment, the inventive system may reside on a machine such as computer platform 2601. According to one embodiment of the invention, the techniques described herein are performed by computer system 2600 in response to processor 2605 executing one or more sequences of one or more instructions contained in the volatile memory 2606. Such instructions may be read into volatile memory 2606 from another computer-readable medium, such as persistent storage device 2608. Execution of the sequences of instructions contained in the volatile memory 2606 causes processor 2605 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 2605 for execution. The computer-readable medium is just one example of a machine-readable medium, which may carry instructions for implementing any of the methods and/or techniques described herein. Such a medium may take many forms, including but not limited to, non-volatile media and volatile media. Non-volatile media includes, for example, optical or magnetic disks, such as storage device 2608. Volatile media includes dynamic memory, such as volatile storage 2606.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, a flash drive, a memory card, any other memory chip or cartridge, a carrier wave as described hereinafter, or any other medium from which a computer can read.

Various forms of computer readable media may be involved in carrying one or more sequences of one or more instructions to processor 2605 for execution. For example, the instructions may initially be carried on a magnetic disk from a remote computer. Alternatively, a remote computer can load the instructions into its dynamic memory and send the instructions over a telephone line using a modem. A modem local to computer system 2600 can receive the data on the telephone line and use an infra-red transmitter to convert the data to an infra-red signal. An infra-red detector can receive the data carried in the infra-red signal and appropriate circuitry can place the data on the data bus 2604. The bus 2604 carries the data to the volatile storage 2606, from which processor 2605 retrieves and executes the instructions. The instructions received by the volatile memory 2606 may optionally be stored on persistent storage device 2608 either before or after execution by processor 2605. The instructions may also be downloaded into the computer platform 2601 via Internet using a variety of network data communication protocols well known in the art.

The computer platform 2601 also includes a communication interface, such as network interface card 2613 coupled to the data bus 2604. Communication interface 2613 provides a two-way data communication coupling to a network link 2614 that is coupled to a local network 2615. For example, communication interface 2613 may be an integrated services digital network (ISDN) card or a modem to provide a data communication connection to a corresponding type of telephone line. As another example, communication interface 2613 may be a local area network interface card (LAN NIC) to provide a data communication connection to a compatible LAN. Wireless iinks, such as well-known 802.11a, 802.11b, 802.11g and Bluetooth may also used for network implementation. In any such implementation, communication interface 2613 sends and receives electrical, electromagnetic or optical signals that carry digital data streams representing various types of information.

Network link 2613 typically provides data communication through one or more networks to other network resources. For example, network link 2614 may provide a connection through local network 2615 to a host computer 2616, or a network storage/server 2617. Additionally or alternatively, the network link 2613 may connect through gateway/firewall 2617 to the wide-area or global network 2618, such as an Internet. Thus, the computer platform 2601 can access network resources located anywhere on the Internet 2618, such as a remote network storage/server 2619. On the other hand, the computer platform 2601 may also be accessed by clients located anywhere on the local area network 2615 and/or the Internet 2618. The network clients 2620 and 2621 may themselves be implemented based on the computer platform similar to the platform 2601.

Local network 2615 and the Internet 2618 both use electrical, electromagnetic or optical signals that carry digital data streams. The signals through the various networks and the signals on network link 2614 and through communication interface 2613, which carry the digital data to and from computer platform 2601, are exemplary forms of carrier waves transporting the information.

Computer platform 2601 can send messages and receive data, including program code, through the variety of network(s) including Internet 2618 and LAN 2615, network link 2614 and communication interface 2613. In the Internet example, when the system 2601 acts as a network server, it might transmit a requested code or data for an application program running on client(s) 2620 and/or 2621 through Internet 2618, gateway/firewall 2617, local area network 2615 and communication interface 2613. Similarly, it may receive code from other network resources.

The received code may be executed by processor 2605 as it is received, and/or stored in persistent or volatile storage devices 2608 and 2606, respectively, or other non-volatile storage for later execution.

It should be noted that the present invention is not limited to any specific firewall system. The inventive policy-based content processing system may be used in any of the three firewall operating modes and specifically NAT, routed and transparent.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in the computerized storage systems with data deduplication functionality. It is intended that the specification and examples be considered as exemplary only, with

## Claims

1. A storage system comprising:
a data storage volume;
a memory storing metadata associated with a data storage volume;
a network interface configured to connect the storage system with a host computer; and
a central processing unit;
wherein said storage system calculates an identifier from data received from the host computer, and determines if the data is stored in the data storage volume by the identifier and said metadata.

2. The storage system of claim 1, wherein the identifier comprises a Secure Hash Algorithm (SHA) value of the data received from said host computer and/or a combination of Secure Hash Algorithm (SHA) value of the data and number of hash conflicts.

3. The storage system of claim 1,
wherein the storage system stores the data received from host computer before determining if the data is stored is stored or not.

4. The storage system of claim 3, wherein the storage system executes the identifier calculation and the determination asynchronously after storing the data in the data storage volume.

5. The storage system of claim 1,
wherein the storage system determines that the data is not stored in the data volume, the storage system allocates at least one chunk from a chunk pool to the data storage volume and store the data received from said host computer in the allocated at least one chunk.

6. The storage system of claim 1,
wherein the storage system determines that the data is stored in the data volume, the storage system discards the data received from said host computer.

7. The storage system of claim 1:
wherein the data from which said storage system calculates an identifier exists in an object received from the host computer, and wherein said storage system determines if the data is stored in the data storage volume by the identifier, said metadata stored in the memory and metadata in said object.

8. The storage system of claim 7, wherein the identifier comprises at least one of a Secure Hash Algorithm (SHA) value of the data in the object, number of hash conflicts,a sequential number assigned when a conflict in hash value is detected,
and data size of the object.

9. A storage system of claim 7, wherein the object is composed of data, file name and metadata.

10. The storage system of claim 7, wherein the storage system stores the data received from host computer before determining if the data is stored is stored or not.

11. The storage system of claim 7, wherein the storage system executes the identifier calculation and the determination asynchronously after storing the data in the data storage volume.

12. The storage system of claim 1 or 7, further comprising;
a management network interface configured to connect the storage system with a management computer;
wherein the metadata is registered from the management computer.

13. The storage system of claim 7 or 9, wherein the storage system determines that the data is not stored in the data volume, the storage system allocates at least one chunk from a chunk pool to the data storage volume and store the data received from said host computer in the allocated at least one chunk.

14. The storage system of claim 7 wherein the storage system determines that the data is stored in the data volume, the storage system discards the data received from said host computer.

15. A method performed in a storage system comprising a plurality of data storage units, the plurality of data storage units being divided into a plurality of chunks forming a chunk pool; a network interface configured to connect the storage system with a host computer; and a storage controller comprising a central processing unit and a memory, the method comprising:
i. provisioning a data storage volume and making the data storage volume available to the host computer via the network interface;
ii. upon receipt of a write command directed to the data storage volume from the host computer, calculating an identifier corresponding to the data associated with the write command;
iii. grouping the identifier based on metadata into at least one identifier group;
iv. confirming uniqueness of the identifier within the identifier group associated with the metadata; and
v. if the identifier is unique within the identifier group, allocating at least one chunk from the chunk pool to the data storage volume and storing the data associated with the write command in the allocated at least one chunk.
